# EUROPÄISCHE PATENTSCHRIFT

(11) **EP 2 142 359 B1**
(45) Veröffentlichungstag und Bekanntmachung des Hinweises auf die Patenterteilung: **22.09.2010**
(21) Anmeldenummer: 08708639.3
(22) Anmeldetag: 04.02.2008
(51) Int. Cl.: B29C 70/68, F16B 37/12

(54) **ANORDNUNG MIT MINDESTENS EINEM IN BERÜHRUNGSKONTAKT MIT MINDESTENS EINEM KUNSTSTOFFBAUELEMENT STEHENDEN METALLTEIL**
ARRANGEMENT HAVING AT LEAST ONE METAL PART WHICH CONTACTS AT LEAST ONE PLASTIC COMPONENT
ENSEMBLE COMPRENANT AU MOINS UNE PIÈCE MÉTALLIQUE EN CONTACT AVEC AU MOINS UN COMPOSANT EN PLASTIQUE

(30) Priorität: 29.03.2007 DE 102007016126
(43) Veröffentlichungstag der Anmeldung: 13.01.2010
(73) Patentinhaber: Robert Bosch GmbH, 70442 Stuttgart (DE)
(72) Erfinder: MUELLER, Lutz, 72631 Aichtal (DE); WALLE, Bernard, 71282 Hemmingen (DE)
(86) Internationale Anmeldenummer: PCT/EP2008/051335
(87) Internationale Veröffentlichungsnummer: WO 2008/119578

(56) Entgegenhaltungen:
- EP-A- 0 319 659
- EP-A- 1 524 336
- US-A1- 2003 190 213

## Beschreibung

Die Erfindung betrifft eine Anordnung mit mindestens einem in Berührungskontakt mit mindestens einem Kunststoffbauelement stehenden Metallteil.

### Stand der Technik

Anordnungen der eingangs genannten Art sind bekannt. Insbesondere in der Fahrzeugindustrie sind derartige Anordnungen üblich. Hierbei werden beispielsweise Stanzgitter zur elektrischen Kontaktierung in ein Kunststoffbauelement eingelegt oder an/in diesen befestigt, wobei ein Berührungskontakt zwischen dem Metallteil (Stanzgitter) und dem Kunststoffbauelement entsteht. Häufig wird durch Formgebung des Kunststoffbauelements die Lageposition des Metallteils eindeutig bestimmt beziehungsweise vorgegeben, wodurch beispielsweise die Montage des Metallteils an dem Kunststoffbauelement vereinfacht wird. Im Bereich des Berührungskontaktes kann es zu einer Korrosion des Metallteils kommen, die dazu führen kann, dass auch bei Elektrolyteinwirkung das Kunststoffbauelement im Bereich des Berührungskontaktes angegriffen, korrodiert, aufgelöst beziehungsweise zerstört wird. Dies kann dazu führen, dass der Berührungskontakt verloren geht und sich das Metallteil von dem Kunststoffbauelement löst. Insbesondere bei Metallteilen, die zur Befestigung anderer Bauteile dienen, wie zum Beispiel Einlegemuttern, die in das Kunststoffbauelement beispielsweise durch Umspritzen integriert wurden, darf es nicht zu einer derartigen Ablösung kommen.

Die DE 101 48 120 A1 offenbart zum Beispiel ein elektronisches Bauteil mit einem Halbleiterchip, der auf einem metallischen Systemträger angeordnet ist, wobei der metallische Systemträger sowie der Halbleiterchip zumindest teilweise in eine ein Kunststoffbauelement bildende Kunststoffpressmasse eingebettet sind.

EP-A-319659 offenbart die Merkmale des Oberbegriffs des Anspruchs 1.

### Offenbarung der Erfindung

Die Erfindung sieht vor, dass das Metallteil eine galvanisch aufgebrachte Aluminium-Oberflächenbeschichtung aufweist. Ein Berührungskontakt zwischen dem Metallteil und dem Kunststoffbauelement entsteht dann entsprechend zwischen dem Kunststoffbauelement und der Aluminium-Oberflächenbeschichtung des Metallteils. Bei Korrosion des Metallteils beziehungsweise der Aluminium-Oberflächenbeschichtung erreicht eine entstehende Lauge maximal den pH-Wert 10 und führt dadurch zu keinen Auflösungserscheinungen an dem Kunststoffbauelement. Dadurch wird der gewünschte Berührungskontakt zwischen dem Metallteil und dem Kunststoffbauelement auf einfache Art und Weise auf Dauer auch bei Feuchtigkeit oder Elektrolyteinwirkung gewährleistet. Die auf die gesamte Oberfläche des Metallteils galvanisch aufgebrachte Aluminium-Oberflächenbeschichtung ist vorteilhafterweise eine durch Trommelgalvanisierung, Gestellgalvanisierung oder Bandgalvanisierung aufgebrachte Aluminium-Oberflächenbeschichtung.

Vorteilhafterweise ist das Metallteil ein Reinmetallteil oder ein Legierungsmetallteil. Das Metallteil kann ein der elektrischen Kontaktierung dienendes Element oder auch zum Beispiel einen Kühlkörper oder ein mechanisches Befestigungsmittel bilden. Durch die galvanisch aufgebrachte Aluminium-Oberflächenbeschichtung erhält das Metallteil eine selbstpassivierende Oberfläche, die darüber hinaus gut kleb-, beschicht- und aluminiumdrahtbondbar ist. Dies hat insbesondere Vorteile im Bezug auf eine Verwendung des Metallteils als elektrisch leitendes Element. Bildet das Metallteil einen Kühlkörper, so kann der Wärmeleitwiderstand der Aluminium-Oberflächenbeschichtung gegenüber dem Wärmeleitwiderstand der üblicherweise mitverwendeten Klebstoffschichten in der Regel vernachlässigt werden. Die darüber hinaus günstige Wärmeausdehnung eines Metallteils mit einer Aluminium-Oberflächenbeschichtung, das beispielsweise aus Stahl besteht, erlaubt eine Direktmontage eines Chips, insbesondere eines Halbleiterchips. Durch das galvanische Aufbringen der Aluminium-Oberflächenbeschichtung kann das Metallteil unterschiedlichste Formen aufweisen, wobei die gesamte Oberfläche auf einfache Art und Weise durch die genannten Galvanisierungsverfahren mit der Aluminium-Oberflächenbeschichtung versehen werden kann. Ein teures Walzplattieren zur Erzeugung drahtbondfähiger beziehungsweise prozesssicher klebefähiger Oberflächen des Metallteils entfällt. Weiterhin ergibt sich der Vorteil, dass das Metallteil beziehungsweise seine (berührungs-) kontaktierbare Oberfläche nach dem galvanischen Prozess ohne zusätzliche Reinigungsprozesse sauber anfällt.

Besonders bevorzugt ist das Metallteil ein Druckguss- oder Stahlteil. Das galvanische Aufbringen der Aluminium-Oberflächenbeschichtung erlaubt das Verwenden günstiger Grundmaterialien wodurch Gesamtfertigungskosten gesenkt werden. Die galvanisch aufgebrachte Aluminium-Oberflächenbeschichtung weist außerdem eine hohe Duktilität und Schlagfestigkeit auf, sodass das Metallteil in dem Kunststoffbauelement auch hohen mechanischen Belastungen standhält.

Nach einer Weiterbildung der Erfindung ist das Kunststoffbauelement ein Kunststoffgehäuse. Besonders bevorzugt ist das Kunststoffgehäuse ein Gehäuse für ein Steuergerät oder einen Sensor eines Fahrzeugs, insbesondere Kraftfahrzeugs. Derartige Kunststoffgehäuse weisen häufig integrierte Anschlusssteckvorrichtungen auf, die ein Kontaktieren der in dem Gehäuse befindlichen Elektronik erlaubt beziehungsweise ermöglicht. Dabei werden elektrische Kontakte von durch die Gehäusewand hindurchragenden Metallteilen, bevorzugt in Form von Stanzgitterabschnitten, gebildet. Um das Eindringen von Feuchtigkeit in das Kunststoffgehäuse zu verhindern werden die Metallteile beziehungsweise Kontakte durch eine Presspassung von dem Kunststoffgehäuse gehalten. Durch die erfindungsgemäße Ausbildung des Metallteils mit der galvanisch aufgebrachten Aluminium-Oberflächenbeschichtung wird, wie oben bereits erwähnt, ein Auflösen des Kunststoffgehäuses im Bereich des Berührungskontaktes verhindert, sodass die Dichtigkeit dauerhaft gewährleistet ist.

In einem weiteren vorteilhaften Aspekt der Erfindung ist vorgesehen, dass das Metallteil ein Einlege-, Einklebe-, Einbau- und/oder Umspritzungsteil für das Kunststoffbauelement, insbesondere Kunststoffgehäuse, ist. Beispielsweise ist das Metallteil ein in das Kunststoffgehäuse eingelegter oder eingeklebter Kühlkörper, wie er oben beschrieben wurde. Dazu weist das Kunststoffgehäuse beziehungsweise Kunststoffbauelement vorteilhafterweise entsprechende Aufnahmevertiefungen und/oder Aufnahmevorsprünge auf. Ein ein Stanzgitter bildendes Metallteil kann bei der Montage beispielsweise von Kunststoff umspritzt werden, sodass es fest mit diesem verbunden ist. Ein Ablösen aufgrund von Korrosion in der Berührungskontaktfläche beziehungsweise den Berührungskontaktflächen wird dabei wie oben stehend verhindert. Ebenso kann das Metallteil separat oder beispielsweise als Bestandteil eines Stanzgitters die oben beschriebenen Kontakte einer Anschlussvorrichtung bilden, die durch eine Gehäusewand aus dem Gehäuse herausführen. Ebenso können metallische Leiterbahnstrukturen als Einklebeteil vorgesehen sein. Weitere Metallteile, die als Umspritzungsteile für das Kunststoffbauelement vorgesehen sein können, sind beispielsweise Einlegemuttern oder Befestigungsbolzen die ein Gewinde aufweisen. Diese werden besonders bevorzugt formschlüssig durch das Umspritzen an dem Kunststoffbauelement beziehungsweise dem Kunststoffgehäuse gehalten. Aufgrund der vorteilhaften Ausbildung wird ein Auflösen des Kunststoffes im Bereich des Berührungskontaktes und damit ein Lösen des Umspritzungsteils von dem Kunststoffbauelement beziehungsweise dem Kunststoffgehäuse verhindert, wodurch die Funktion des Umspritzungsbauteils, insbesondere seine mechanische Funktion, dauerhaft gewährleistet wird.

Nach einer Weiterbildung der Erfindung sind mehrere Metallteile vorgesehen, die eine galvanisch aufgebrachte Aluminium-Oberflächenbeschichtung aufweisen. Vorteilhafterweise weisen sämtliche in einem Kunststoffgehäuse angeordneten Metallteile auf ihrer (gesamten) Oberfläche jeweils die galvanisch aufgebrachte Aluminium-Oberflächenbeschichtung auf. Dadurch wird auch an metallischen Verbindungs- beziehungsweise Kontaktstellen zwischen zwei Metallteilen, die beispielsweise zur elektrischen Kontaktierung miteinander verbunden sind, eine galvanische Korrosion der Metallverbindungsstellen vermieden. Dadurch, dass die gesamte Oberfläche eines jeden Metallteils eine galvanisch aufgebrachte Aluminium-Oberflächenbeschichtung aufweist wird darüber hinaus verhindert, dass eine Korrosion an einer anderen Stelle auf der Oberfläche des Metallteils auftritt.

In einer vorteilhaften Weiterbildung der Erfindung weisen die Metallteile unterschiedliche und/oder gleiche Grundmaterialien auf. Es können also in der vorteilhaften Anordnung Metallteile vorgesehen sein, die jeweils ein unterschiedliches Material aufweisen, die alle das gleiche Grundmaterial aufweisen oder die zu einem Teil unterschiedliches Grundmaterial und zu einem anderen Teil das gleiche Grundmaterial aufweisen. So können beispielsweise Metallteile vorgesehen sein, von denen ein Teil ein erstes Grundmaterial und der andere Teil ein zweites Grundmaterial aufweisen. Durch die galvanisch aufgebrachte Aluminium-Oberflächenbeschichtung wird eine Korrosion, insbesondere an Metallverbindungsstellen verhindert.

Besonders vorteilhaft ist das Kunststoffgehäuse als PBT- (Polybutylenterephthalat) oder als PET- (Polyethylenterephthalat) Gehäuse ausgebildet. Durch die vorteilhafte Ausbildung des Metallteils ist es ohne Weiteres möglich, derartige, häufig verwendete Materialien für das Kunststoffgehäuse beziehungsweise für das Kunststoffbauelement zu verwenden. Die genannten thermoplastischen Kunststoffe werden aufgrund der Aluminium-Oberflächenbeschichtung auch bei Feuchtigkeit und Elektrolyteinwirkung nicht angegriffen. In einer bevorzugten Ausführungsform ist das Kunststoffgehäuse ein glasfaserverstärktes Kunststoffgehäuse, insbesondere ein glasfaserverstärktes PBT- oder PET-Kunststoffgehäuse.

### Kurze Beschreibung der Zeichnungen

Im Folgenden soll die Erfindung anhand einiger Zeichnungen näher erläutert werden. Dazu zeigen
- Figuren 1a und 1b: ein erstes Ausführungsbeispiel einer vorteilhaften Anordnung,
- Figur 2: ein zweites Ausführungsbeispiel einer vorteilhaften Anordnung und
- Figur 3: ein drittes Ausführungsbeispiel einer vorteilhaften Anordnung.

### Ausführungsform(en) der Erfindung

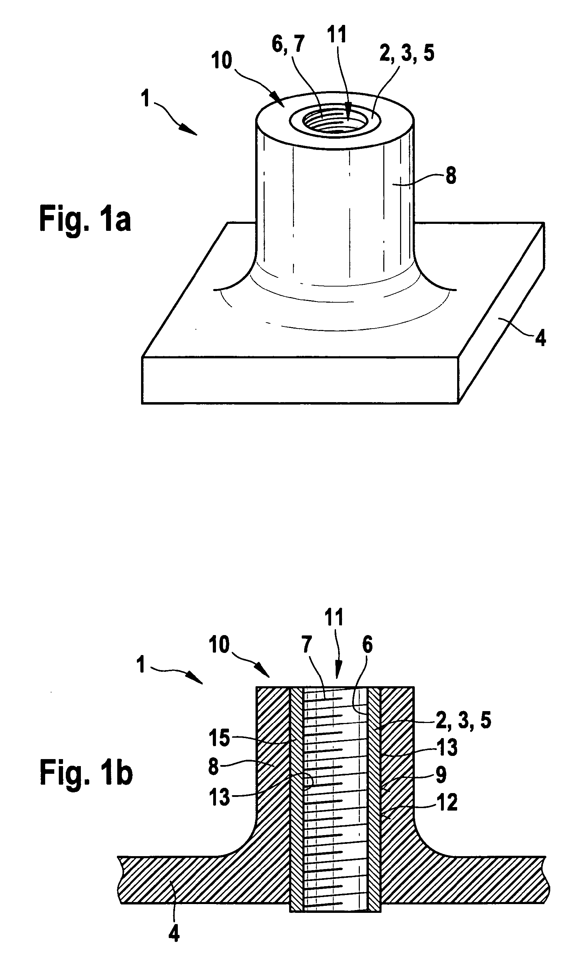

Die Figuren 1a und 1b zeigen eine vorteilhafte Anordnung 1 mit einem Metallteil 2, das als Umspritzungsteil 3 in ein Kunststoffbauelement 4 integriert ist. Die Figur 1a zeigt die Anordnung 1 in einer perspektivischen Darstellung, wohingegen die Figur 1b die Anordnung 1 in einer Schnittdarstellung zeigt. Das Metallteil 2 beziehungsweise das Umspritzungsteil 3 ist als eine Gewindebuchse 5 ausgebildet, die im Wesentlichen kreiszylinderförmig ausgebildet ist und auf ihrer Innenseite 6 ein Gewinde 7 aufweist, in welches eine Befestigungsschraube einschraubbar ist. Das Kunststoffbauelement 4, welches bevorzugt aus Polybutylenterephthalat (PBT) oder Polyethylenterephthalat (PET) besteht, weist einen kreiszylinderförmigen Vorsprung 8 auf, der die Mantelfläche 9 der Gewindebuchse 5 umschließt. An seinem freien Ende 10 schließt der Vorsprung 8 bündig mit der Gewindebuchse 5 ab, sodass eine Einschrauböffnung 11 der Gewindebuchse 5 frei zugänglich ist.

Die gesamte Oberfläche 12 der Gewindebuchse 5 beziehungsweise des Metallteils 2 weist vorteilhafterweise eine galvanisch aufgebrachte Aluminium-Oberflächenbeschichtung 13 auf beziehungsweise wird von dieser gebildet. Da das Metallteil 2 als Umspritzungsteil 3, wie oben beschrieben ausgebildet ist, steht es mit seiner Mantelfläche 9 in Berührungskontakt mit dem Kunststoffbauelement 4. Durch das Umspritzen des Metallteils 2 wird dieses in dem Kunststoffbauelement 4 gehalten. Zum Einen steigert die galvanisch aufgebrachte Aluminium-Oberflächenbeschichtung 13 die Korrosionsbeständigkeit des Metallteils 2 beziehungsweise der Gewindebuchse 5. Zum Anderen wird durch die galvanisch aufgebrachte Aluminium-Oberflächenbeschichtung 13 verhindert, dass sich bei Korrosion das Metallteil 2 von dem Kunststoffbauelement 4 ablöst beziehungsweise der Kunststoff beschädigt wird. Aufgrund der Aluminium-Oberflächenbeschichtung 13 erreicht eine entstehende Lauge bei Korrosion maximal den pH-Wert 10, wodurch an dem Kunststoffbauelement 4 keine Auflösungserscheinungen im Bereich des Berührungskontaktes auftreten, die zu einem Ablösen des Metallteils 2 von dem Kunststoffbauelement 4 führen würden. Bevorzugt ist das Metallteil 2 als Reinmetallteil oder Legierungsmetallteil ausgebildet. In dem vorliegenden Ausführungsbeispiel ist das Metallteil 2 als günstiges Druckgussmetallteil 15 ausgebildet.

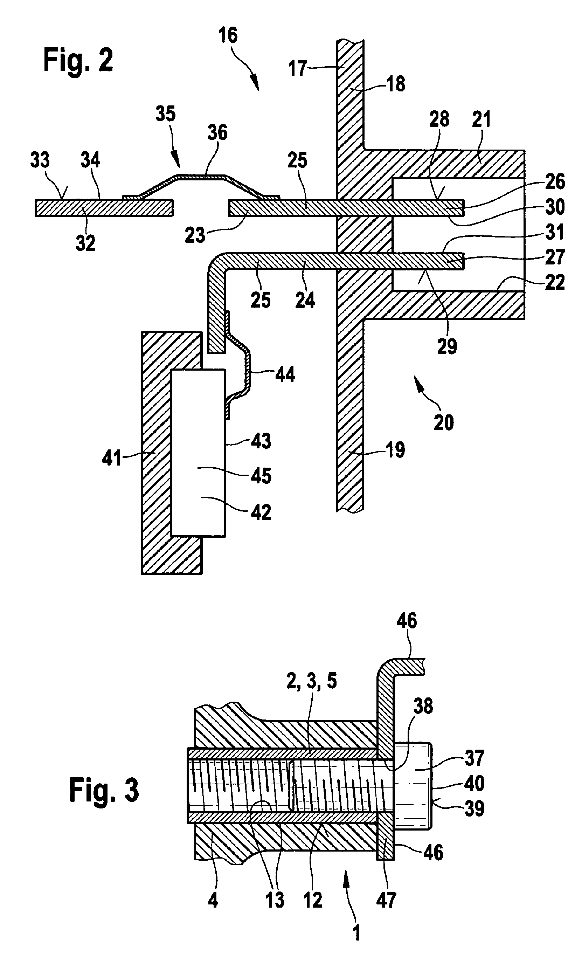

Die Figur 2 zeigt ein weiteres Ausführungsbeispiel einer vorteilhaften Anordnung 16 in einer Schnittdarstellung. Die Anordnung 16 weist ein erstes Kunststoffbauelement 17 auf, welches als eine Gehäusewand 18 eines Kunststoffgehäuses 19 ausgebildet ist. Die Gehäusewand 18 weist eine Anschlusssteckvorrichtung 20 auf, die in die Gehäusewand 18 integriert ist. Die Anschlusssteckvorrichtung 20 weist einen im Wesentlichen senkrecht von der Gehäusewand 18 hervorstehenden Vorsprung 21 auf, in dem eine Steckeraufnahme 22 ausgebildet ist. Der Vorsprung 21 ist vorteilhafterweise einstückig mit der Gehäusewand 18 ausgebildet. Im Bereich der Anschlusssteckvorrichtung 20 sind zwei Metallteile 23 und 24 angeordnet, die als Teile eines Stanzgitter 25 ausgebildet sind und derart durch die Gehäusewand 18 gesteckt sind, dass sie in die Steckeraufnahme 22 der Anschlusssteckvorrichtung 20 ragen, sodass ein in die Anschlusssteckvorrichtung 20 beziehungsweise die Steckeraufnahme 22 eingeschobener Stecker das Stanzgitter 25 beziehungsweise die Metallteile 23 und 24 und somit eine in dem Kunststoffgehäuse 19 befindliche Elektronik elektrisch kontaktieren kann. Die Metallteile 23 und 24 des Stanzgitters 25 bilden dabei mit der Gehäusewand 18 aufgrund einer Presspassung einen vollumfänglichen Berührungskontakt. Wie oben zu der Gewindebuchse 5 bereits beschrieben, werden auch die Oberflächen 28, 29 der Metallteile 23 und 24, die in diesem Fall als Einbauteile 26, 27 ausgebildet sind, von einer galvanisch aufgebrachten Aluminium-Oberflächenbeschichtung 30 beziehungsweise 31 gebildet, die wiederum in Berührungskontakt mit dem Kunststoffbauelement 17 steht. Durch die Aluminium-Oberflächenbeschichtung 30, 31 wird verhindert, dass das Kunststoffbauelement 17 durch Korrosion angegriffen wird, wodurch die Dichtigkeit der Pressverbindung nicht mehr gewährleistet werden könnte.

Weiterhin weist die Anordnung 16 ein weiteres Metallteil 32 auf, dessen gesamte Oberfläche 33 ebenfalls von einer galvanisch aufgebrachten Aluminium-Oberflächenbeschichtung 34 gebildet wird. Unabhängig von dem verwendeten Grundmaterial des Metallteils 32 kann auf einfache Art und Weise eine Aliminiumdrahtbondverbindung 35 mittels eines Aluminiumbonddrahtes 36 zwischen dem Metallteil 23 und dem Metallteil 32 erstellt werden.

Weiterhin weist die Anordnung 16 ein in einem Kunststoffbauelement 41 zumindest teilweise eingebetteten Kühlkörper 42 auf, der eine galvanisch aufgebrachte Aluminium-Oberflächenbeschichtung 43 aufweist und mittels eines Aluminium-Bonddrahtes 44 mit dem Metallteil 24, beziehungsweise dem Stanzgitter 25 verbunden ist. Über den Aluminium-Bonddraht 44 kann Wärme auf den Kühlkörper 42, unabhängig von dem Material des den Kühlkörper 42 bildenden Metallteils 45, auf einfache Art und Weise abgeführt werden. Wobei der Wärmeleitwiderstand der Aluminium-Oberflächenbeschichtung 43 gegenüber dem Wärmeleitwiderstand von üblicherweise verwendeten Klebstoffschichten, die für ein sicheres und dauerhaftes Kontaktieren des Kühlkörpers 42 ohne die Aluminium-Oberflächenbeschichtung 43 notwendig wären, wie bereits gesagt, vernachlässigt werden kann.

Die Figur 3 zeigt ein weiterführendes Ausführungsbeispiel der in den Figuren 1a und 1b beschriebenen Anordnung 1. Dabei ist eine metallische Befestigungsschraube 37 durch eine Öffnung 38 eines eine galvanisch aufgebrachte Aluminium-Oberflächenbeschichtung 46 aufweisenden Metallteils 47 in die Gewindebuchse 5 eingeschraubt, um das Metallteil 47 zusätzlich an dem Kunststoffbauelement 4, welches ein Bestandteil des Kunststoffgehäuses 19 sein kann, zu befestigen. Vorteilhafterweise weist die Oberfläche 39 der Schraube 37 ebenfalls eine galvanisch aufgebrachte Aluminium-Oberflächenbeschichtung 40 auf. Da nunmehr ebenfalls die miteinander in Kontakt stehenden Oberflächen der Metallteile 47, 2, und 37 von jeweils einer Aluminium-Oberflächenbeschichtung 46, 13 und 40 gebildet werden beziehungsweise diese aufweisen, wird auch eine Korrosion an den metallischen Kontaktstellen wirksam verhindert.

Das Aufbringen der Aluminium-Oberflächenbeschichtung auf die oben beschriebenen Metallteile 2, 23, 24, 37 und 47 kann auf einfache Art und Weise durch eine Gestell-, Band- oder Trommelgalvanisierung erfolgen.

## Patentansprüche

1. Anordnung mit mindestens einem in Berührungskontakt mit mindestens einem Kunststoffbauelement stehenden Metallteil, **dadurch gekennzeichnet, dass** das Metallteil (2;23,24,32,37,45,47) eine galvanisch aufgebrachte Aluminium-Oberflächenbeschichtung (13;30,31,34,40,43,46) aufweist.

2. Anordnung nach Anspruch 1, **dadurch gekennzeichnet, dass** das Metallteil (2;23,24,32,37,45,47) ein Reinmetallteil oder ein Legierungsmetallteil ist.

3. Anordnung nach einem der vorhergehenden Ansprüche, **dadurch gekennzeichnet, dass** das Metallteil (2;23,24,32,37,45,47) ein Druckgussteil (15) ist.

4. Anordnung nach einem der vorhergehenden Ansprüche, **dadurch gekennzeichnet, dass** das Kunststoffbauelement (4;17) ein Kunststoffgehäuse (19) ist.

5. Anordnung nach einem der vorhergehenden Ansprüche, **dadurch gekennzeichnet, dass** das Metallteil (2;23,24,32,37,45,47) ein Einlege-, Einklebe-, Einbau- und/oder Umspritzungsteil (3) für das Kunststoffbauelement (4;17), insbesondere Kunststoffgehäuse (19), ist.

6. Anordnung nach einem der vorhergehenden Ansprüche, **gekennzeichnet durch** mehrere, mit Aluminium-Oberflächenbeschichtung (30,31,34,40,43,46) versehene Metallteile (23,24,32,37,45,47).

7. Anordnung nach einem der vorhergehenden Ansprüche, **dadurch gekennzeichnet, dass** die Metallteile (23,24,32,37,45,47) unterschiedliche und/oder gleiche Grundmaterialien aufweisen.

8. Anordnung nach einem der vorhergehenden Ansprüche, **dadurch gekennzeichnet, dass** die Aluminium-Oberflächenbeschichtung (13;30,31,34,40,43,46) des Metallteils (2;23,24,32,37,45,47) eine Gestell-, Band- oder Trommelgalvanisierungsbeschichtung ist.

9. Anordnung nach einem der vorhergehenden Ansprüche, **dadurch gekennzeichnet, dass** das Kunststoffgehäuse (19) ein PBT- (Polybutylenterephthalat) oder PET- (Polyethylenterephthalat) Gehäuse ist.

10. Anordnung nach einem der vorhergehenden Ansprüche, **dadurch gekennzeichnet, dass** das Kunststoffgehäuse (19) ein glasfaserverstärktes Kunststoffgehäuse ist.

11. Anordnung nach einem der vorhergehenden Ansprüche, **dadurch gekennzeichnet, dass** das Metallteil (2) eine Buchse ist.

12. Anordnung nach einem der vorhergehenden Ansprüche, **dadurch gekennzeichnet, dass** das Metallteil (2) eine Gewindebuchse (5) ist.

13. Anordnung nach einem der vorhergehenden Ansprüche, **dadurch gekennzeichnet, dass** das Metallteil (45) ein Kühlkörper (42) ist.

14. Anordnung nach einem der vorhergehenden Ansprüche, **dadurch gekennzeichnet, dass** das Metallteil (23,24) ein Stanzgitter (25) ist.

15. Anordnung nach einem der vorhergehenden Ansprüche, **dadurch gekennzeichnet, dass** das Metallteil (2) eine spanend gefertigte, geschmiedete und/oder tiefgezogene Buchse oder Gewindebuchse (5) ist.

## Claims

1. Arrangement having at least one metal part in touching contact with at least one plastic component, **characterized in that** the metal part (2; 23, 24, 32, 37, 45, 47) has an aluminium surface coating (13; 30, 31, 34, 40, 43, 46) applied by electroplating.

2. Arrangement according to Claim 1, **characterized in that** the metal part (2; 23, 24, 32, 37, 45, 47) is a pure metal part or an alloy metal part.

3. Arrangement according to either of the preceding claims, **characterized in that** the metal part (2; 23, 24, 32, 37, 45, 47) is a pressure die casting (15).

4. Arrangement according to one of the preceding claims, **characterized in that** the plastic component (4; 17) is a plastic housing (19).

5. Arrangement according to one of the preceding claims, **characterized in that** the metal part (2; 23, 24, 32, 37, 45, 47) is an insertion part, a bonded-in part, a built-in part and/or a part (3) which has been encapsulated by injection moulding for the plastic component (4; 17), in particular plastic housing (19).

6. Arrangement according to one of the preceding claims, **characterized by** a plurality of metal parts (23, 24, 32, 37, 45, 47) provided with an aluminium surface coating (30, 31, 34, 40, 43, 46).

7. Arrangement according to one of the preceding claims, **characterized in that** the metal parts (23, 24, 32, 37, 45, 47) have different and/or identical base materials.

8. Arrangement according to one of the preceding claims, **characterized in that** the aluminium surface coating (13; 30, 31, 34, 40, 43, 46) of the metal part (2; 23, 24, 32, 37, 45, 47) is a coating applied by rack, strip or barrel electroplating.

9. Arrangement according to one of the preceding claims, **characterized in that** the plastic housing (19) is a PBT (polybutylene terephthalate) or PET (polyethylene terephthalate) housing.

10. Arrangement according to one of the preceding claims, **characterized in that** the plastic housing (19) is a glass-fibre-reinforced plastic housing.

11. Arrangement according to one of the preceding claims, **characterized in that** the metal part (2) is a bushing.

12. Arrangement according to one of the preceding claims, **characterized in that** the metal part (2) is a threaded bushing (5).

13. Arrangement according to one of the preceding claims, **characterized in that** the metal part (45) is a heat sink (42).

14. Arrangement according to one of the preceding claims, **characterized in that** the metal part (23, 24) is a stamped grid (25).

15. Arrangement according to one of the preceding claims, **characterized in that** the metal part (2) is a bushing or threaded bushing (5) which has been produced by machining, forged and/or deep-drawn.

## Revendications

1. Agencement comprenant au moins une pièce métallique en contact avec au moins un composant en plastique, **caractérisé en ce que** la pièce métallique (2 ; 23, 24, 32, 37, 45, 47) présente un revêtement de surface en aluminium (13 ; 30, 31, 34, 40, 43, 46) appliqué par voie galvanique.

2. Agencement selon la revendication 1, **caractérisé en ce que** la pièce métallique (2 ; 23, 24, 32, 37, 45, 47) est une pièce en métal pur ou une pièce en alliage métallique.

3. Agencement selon l'une quelconque des revendications précédentes, **caractérisé en ce que** la pièce métallique (2 ; 23, 24, 32, 37, 45, 47) est une pièce moulée sous pression (15).

4. Agencement selon l'une quelconque des revendications précédentes, **caractérisé en ce que** le composant en plastique (4 ; 17) est un boîtier en plastique (19).

5. Agencement selon l'une quelconque des revendications précédentes, **caractérisé en ce que** la pièce métallique (2 ; 23, 24, 32, 37, 45, 47) est une pièce d'insertion, une pièce collée, encastrée et/ou surmoulée (3) pour le composant en plastique (4 ; 17), notamment le boîtier en plastique (19).

6. Agencement selon l'une quelconque des revendications précédentes, **caractérisé par** plusieurs pièces métalliques (23, 24, 32, 37, 45, 47) pourvues d'un revêtement de surface en aluminium (30, 31, 34, 40, 43, 46).

7. Agencement selon l'une quelconque des revendications précédentes, **caractérisé en ce que** les pièces métalliques (23, 24, 32, 37, 45, 47) présentent des matériaux de base différents et/ou similaires.

8. Agencement selon l'une quelconque des revendications précédentes, **caractérisé en ce que** le revêtement de surface en aluminium (13 ; 30, 31, 34, 40, 43, 46) de la pièce métallique (2 ; 23, 24, 32, 37, 45, 47) est un revêtement galvanique à bâti, à bande ou à tambour.

9. Agencement selon l'une quelconque des revendications précédentes, **caractérisé en ce que** le boîtier en plastique (19) est un boîtier en PBT (téréphtalate de polybutylène) ou en PET (téréphtalate de polyéthylène).

10. Agencement selon l'une quelconque des revendications précédentes, **caractérisé en ce que** le boîtier en plastique (19) est un boîtier en plastique renforcé par des fibres de verre.

11. Agencement selon l'une quelconque des revendications précédentes, **caractérisé en ce que** la pièce métallique (2) est une douille.

12. Agencement selon l'une quelconque des revendications précédentes, **caractérisé en ce que** la pièce métallique (2) est une douille filetée (5).

13. Agencement selon l'une quelconque des revendications précédentes, **caractérisé en ce que** la pièce métallique (45) est un corps de refroidissement (42).

14. Agencement selon l'une quelconque des revendications précédentes, **caractérisé en ce que** la pièce métallique (23, 24) est une grille estampée (25).

15. Agencement selon l'une quelconque des revendications précédentes, **caractérisé en ce que** la pièce métallique (2) est une douille ou une douille filetée (5) fabriquée par enlèvement de copeaux, forgée et/ou emboutie.
